# EUROPEAN PATENT APPLICATION

(11) **EP 0 632 556 A1**
(43) Date of publication of application: **04.01.1995**
(21) Application number: 94650016.2
(22) Date of filing: 28.06.1994
(51) Int. Cl.: H02G 7/05

(54) **A cable support bracket**

(30) Priority: 28.06.1993 IE 930486
(71) Applicant: Waters, Martin, Castlebar, County Mayo (IE)
(72) Inventor: Waters, Martin, Castlebar, County Mayo (IE)
(74) Representative: Schütte, Gearoid

(57) **Abstract**

A cable support bracket (1) has a pair of plates (2, 3) forming clamp jaws. The plates (2, 3) are secured together by locking bolts (4). A lower end (8, 9) of each plate (2, 3) is curved forming a grip for reception of a cable suspension wire. A central open-ended U-shaped slot (7) is provided on each plate (2, 3) for engagement with a bolt on a telegraph pole or the like to sit the bracket (1) on the bolt for supporting the wire on the pole.

## Description

This invention relates to a cable support bracket, and in particular for supporting aerial telephone cables.

When an aerial telephone cable is erected on a pole, at a roadside for example, the cable may be supported on a hook. The hook is generally J-shaped and has a bent lower portion forming a support for the telephone cable. The cable rests on the hook which often causes damage to the cable due to chaffing of the cable on the hook particularly in windy areas. The hook is fixed to the pole using a long mounting bolt 17 mm in thickness which passes through the hook and pole and one or more coach screws. To try to prevent chaffing the cable may be bound to the hook, using for example electric wire, however, this is unsatisfactory and can gradually work loose. A number of plastic and rubber inserts have been proposed for mounting within the bend of the hook and surrounding the cable to support the cable and prevent it from chaffing. A disadvantage of these is that the hook fixing bolt has to be removed from the pole to fit these inserts. It will be appreciated that as the bolts are exposed to the elements they are generally rusted and extremely difficult to remove and often have to be cut for removal. It is therefore a difficult and time consuming task to fit these inserts to existing pole-mounted hooks.

The present invention is directed towards overcoming this problem.

According to the invention there is provided a cable support bracket having a cable holder and means for securing the bracket to a support. Preferably the securing means is an open-ended slot for engagement with the support.

Conveniently, the cable holder is engageable with a cable to retain the cable across an inlet of the slot.

Preferably, the cable holder has means to grip a cable at each side of the slot.

In a preferred embodiment of the invention the cable holder is a clamp. Preferably the clamp is releasable. Ideally the clamp is releasably engageable with a suspension wire of a cable.

Conveniently the clamp may be formed by a pair of movable jaws. Preferably the jaws have a grip portion shaped for reception of a cable suspension wire.

In a particularly preferred embodiment, the jaws are formed by an associated pair of plates, each plate having a cable grip portion along a lower end of the plate, a slot for engagement with the support extending inwardly from a lower end of each plate, and fastener means being provided to secure the plates together.

In a preferred embodiment the slot is U-shaped having a curved inner end for engagement with the support member.

In a particularly preferred embodiment the slot is shaped for complementary engagement with a hook fixing bolt.

Ideally the slot is located centrally on each jaw extending inwardly from an outer edge of the jaw.

As mentioned above, a pair of separate plates may be provided. In an alternative arrangement, the plates may be hingedly interconnected, preferably at an upper end of each plate. In another arrangement, the plates may be integrally formed from a single sheet of material bent intermediate its ends.

In a further embodiment, locking means is provided engageable with the support member and the bracket to prevent movement of the bracket on the support member. Preferably the locking means comprises a pair of stops engageable with the support member on each side of the bracket. Ideally the stops are releasably engageable with the support member. Preferably each stop has means for snap engagement of the stop with the support member. Preferably each stop has a slot for reception of the support member defined by a pair of outwardly extending arms resiliently deformable for reception of the support member therebetween.

Conveniently, a groove is formed at a lower portion of an inner plate-engaging face of each stop. Further, an outer support-engaging face of each stop may be shaped for complementary interengagement with the support. For example, the outer face may be curved for engagement with an inner curved face of a cable support hook.

Conveniently, the stops may be of plastics material.

In another embodiment the jaws are moveable by means of a pair of spaced-apart bolts passing through and engaging the jaws to secure the jaws together. Each bolt may pass through a hole in one jaw for engagement with a threaded hole in the other jaw. Alternatively each bolt may be fixed to one jaw and passed through a complementary hole in the other jaw, being secured to the other jaw by means of a nut.

The invention will be more clearly understood by the following description of an embodiment thereof, given by way of example only, with reference to the accompanying drawings, in which;
Fig. 1 is an exploded perspective view of a cable support bracket assembly according to the invention;
Fig. 2 is an elevational view of a plate forming portion of the bracket;
Fig. 3 is an end elevational view of the plate of Fig. 2;
Fig. 4 is an elevational view of a spacer forming portion of the bracket assembly;
Fig. 5 is an end elevational view of the spacer;
Fig. 6 is an elevational view of a conventional cable support hook for mounting on a telegraph pole;
Fig. 7 is a side elevational view of the hook;
Fig. 8 is a plan view of the hook;
Fig. 9 is a side partially sectioned view showing the cable support bracket assembly in use mounting a cable on the hook;
Fig. 10 is an elevational view of a plate forming portion of another cable support bracket;
Fig. 11 is a side elevational view of the plate shown in Fig. 10;
Fig. 12 is an elevational view of another plate which, together with the plate of Fig. 10, forms a cable support bracket;
Fig. 13 is an end elevational view of the plate of Fig. 12;
Fig. 14 is an elevational view of a spacer forming portion of another cable support bracket;
Fig. 15 is a plan view of the spacer of Fig. 14; and
Fig. 16 is an end elevational view of the spacer of Fig. 14.

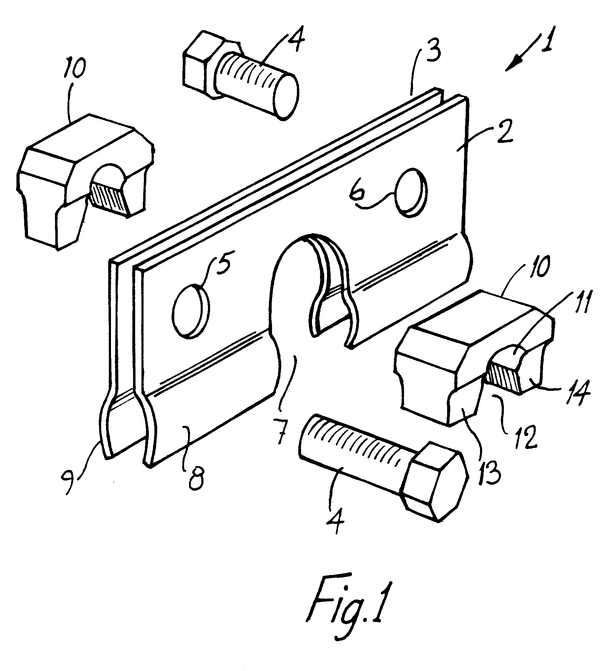

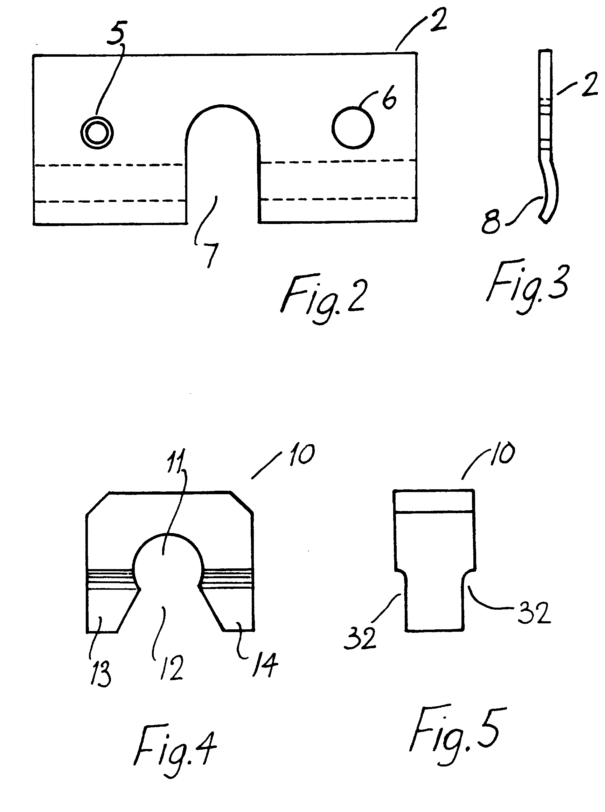

Referring to the drawings, and initially to Figs. 1 to 9 thereof, there is illustrated a cable support bracket according to the invention indicated generally by the reference numeral 1. The assembly 1 comprises a pair of plates 2, 3 forming clamp jaws, the plates 2, 3 secured together by locking bolts 4 which engage with holes 5, 6 in the brackets 2, 3. It will be noted that one of the holes 5, 6 is threaded for engagement by a bolt 4. A central U-shaped slot 7 is provided on each plate 2, 3 extending upwardly from a lower end of each plate 2, 3. A lower end 8, 9 of each plate 2, 3 is curved forming a grip for reception of a suspension wire of a cable as will be described later.

A pair of plastic spacers 10 are provided and form stops to limit or prevent movement of the bracket 1 on a support member such as a hook fixing bolt. Each spacer 10 has a circular slot 11 with a flared inlet 12 defined by arms 13, 14 which resiliently spring apart for snap engagement of the slot 11 with a hook fixing bolt as will be described later. Cut-away grooves 32 are formed at a lower end of each face of the spacers 10.

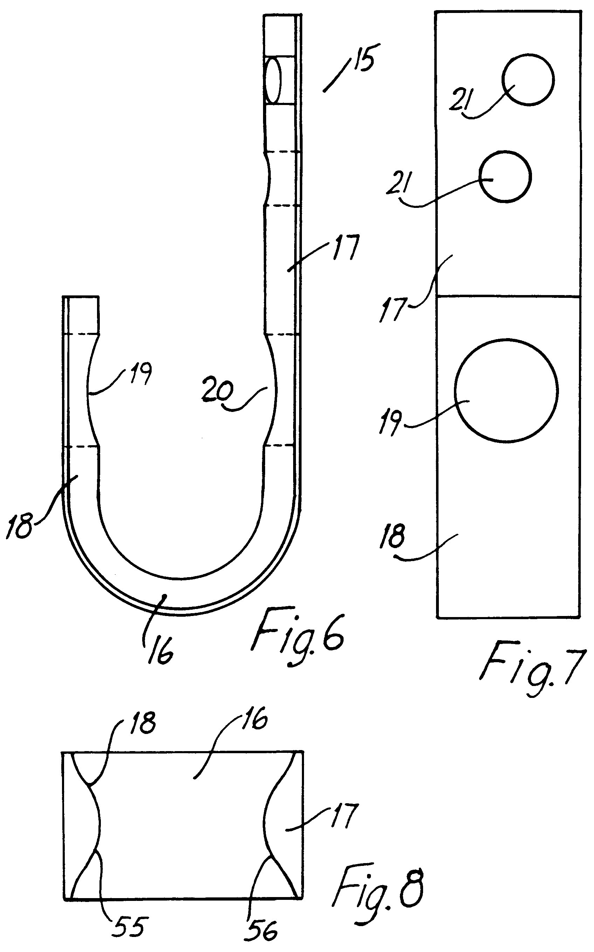

Referring to Figs. 6 to 8 a conventional cable mounting hook is shown. The hook 15 is J-shaped with a curved lower end 16 and outwardly extending arms, namely, a mounting arm 17 and a free arm 18. Two holes 19, 20 are provided in the free arm 18 and mounting arm 17 for through passage of a hook fixing bolt. A pair of holes 21 are provided at an upper end of the mounting arm 17 for reception of coach screws.

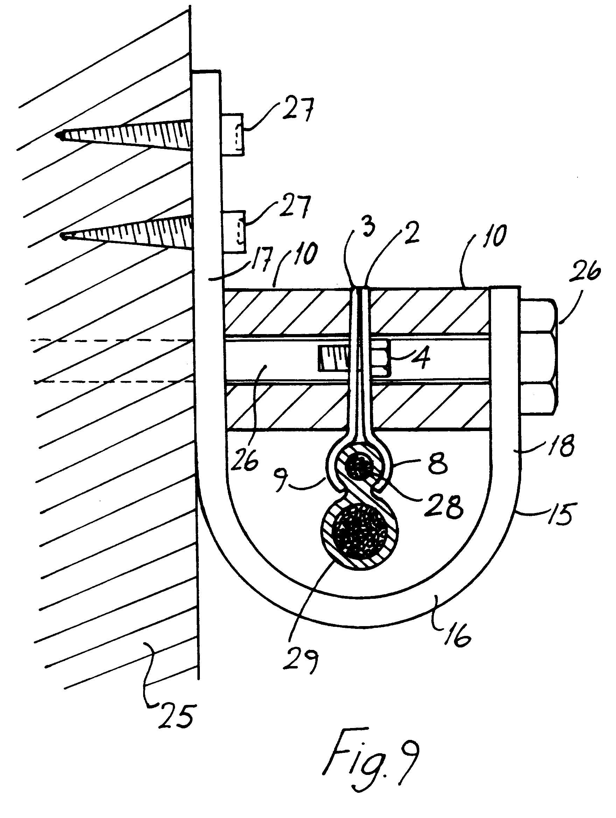

Fig. 9 shows the hook 15 mounted on a telegraph pole 25 by means of a hook fixing bolt 26 which passes through the hook arms 17, 18 and the pole 25. A pair of coach screws 27 are secured to the pole 25 to prevent the hook 15 from rotating on the pole 25.

In use, the plates 2, 3 which are loosely secured together by the bolts 4 are dropped onto the bolt 26, the slot 7 engaging the bolt 26. A suspension wire portion 28 of a cable 29 is then inserted between the lower ends 8, 9 of the plates 2, 3 and the bolts 4 are tightened clamping the plates 2, 3 together with the suspension wire 28 firmly gripped therebetween. It will be noted that the lower ends 8, 9 of the plates grip the cable at each side of the slot 7, retaining the cable 29 across an inlet of the slot 7. Then the spacers 10 are snapped into engagement with the bolt 26 between each plate 2, 3 and the hook arms 17, 18. This prevents the bracket 1 from moving on the bolt 26. It will be noted that the cable 29 is supported securely above the lower end 16 of the hook 15 preventing chaffing of the cable 29. Also the cable is firmly held and cannot twist in the bracket 1.

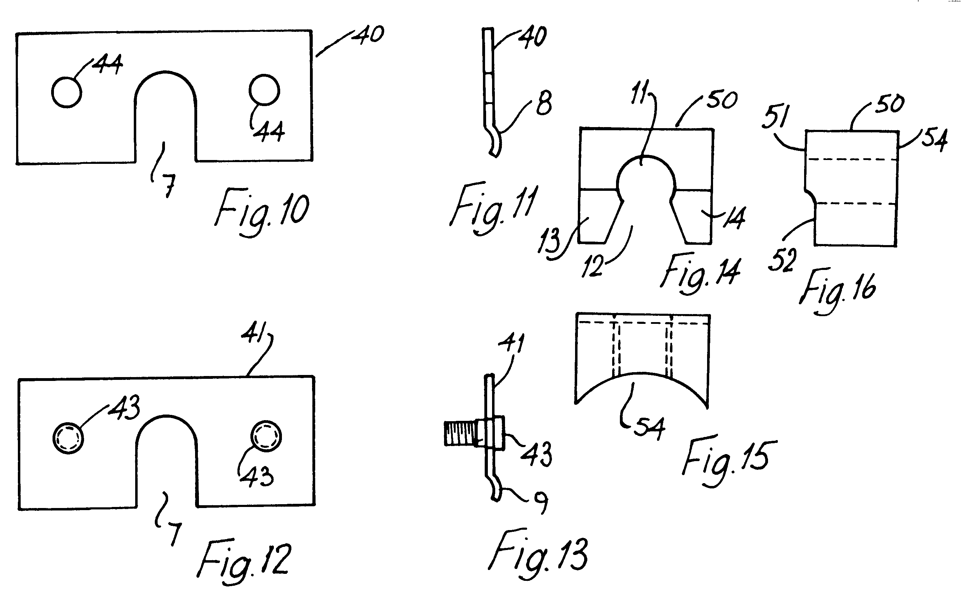

Referring now to Figs. 10 to 13, there is illustrated a pair of plates 40, 41 forming portion of another cable support bracket. These plates 40, 41 are generally similar to the plates of the previous bracket and like parts are assigned the same reference numerals. In this case, fastening bolts 43 are mounted on one of the plates 41 for engagement with threaded holes 44 in the other plate 40.

Referring now to Figs. 14 to 16, there is illustrated an alternative spacer 50 which is generally similar to the spacer described previously and like parts are assigned the same reference numerals. In this case, the spacer 50 has an inner plate-engaging face 51 with a cut-away groove 52 formed at a lower portion of the face 51. The groove 52 conveniently prevent snagging with the lower ends 8, 9 of the plates 2, 3, 40, 41. It will also be noted that an outer support-engaging face 54 of the spacer 50 is curved for complementary inter-engagement with curved faces 55, 56 (see Fig. 8) of the cable support hook 15. Thus, a more secure mounting of the spacers 50 on the support bolt and hook is achieved.

The invention is not limited to the embodiments hereinbefore described which may be varied in both construction and detail.

## Claims

1. A cable support bracket having a cable holder and means for securing the bracket to a support.

2. A bracket as claimed in claim 1 wherein said securing means is an open-ended slot for engagement with the support.

3. A bracket as claimed in claim 2 wherein the cable holder is engageable with a cable to retain the cable across an inlet of the slot.

4. A bracket as claimed in claim 3 wherein the cable holder has means to grip a cable at each side of the slot.

5. A bracket as claimed in any preceding claim wherein the cable holder is a clamp.

6. A bracket as claimed in claim 5 wherein the clamp has a pair of movable jaws formed by an associated pair of plates, each plate having a cable grip portion along a lower end of the plate, a slot for engagement with the support extending inwardly from a lower end of each plate, fastener means being provided to secure the plates together.

7. A bracket as claimed in claim 6 wherein the slot is located centrally on each jaw extending inwardly from an outer edge of the jaw.

8. A bracket as claimed in any preceding claim wherein locking means is provided engageable with the support member and the bracket to prevent movement of the bracket on the support member.

9. A bracket as claimed in claim 8 wherein the locking means comprises a pair of stops engageable with the support member on each side of the bracket.

10. A bracket as claimed in claim 9 wherein each stop has means for snap engagement of the stop with the support member, and preferably each stop has a slot for reception of the support member defined by a pair of outwardly extending arms resiliently deformable for reception of the support member therebetween.

11. A bracket as claimed in claim 9 or 10 wherein a groove is formed at a lower portion of an inner plate-engaging face of each stop, and preferably an outer support-engaging face of each stop is shaped for complementary interengagement with the support.

12. A bracket as claimed in any preceding claim wherein the jaws are moveable by means of a pair of spaced-apart bolts passing through and engaging the jaws to secure the jaws together.
